# EUROPEAN PATENT APPLICATION

(11) **EP 0 831 200 A2**
(43) Date of publication of application: **25.03.1998**
(21) Application number: 97850131.0
(22) Date of filing: 15.09.1997
(51) Int. Cl.: E05C 19/14

(54) **Latch handle**

(30) Priority: 18.09.1996 SE 9603394
(71) Applicant: Rosén, Göran, 640 50 Björnlunda (SE)
(72) Inventor: Rosén, Göran, 640 50 Björnlunda (SE)
(74) Representative: Roth, Ernst Adolf Michael

(57) **Abstract**

A latch handle (14) forming a connetecing means between an openable element (12), e.g., a pivotable or displaceable cover, and a fixed element (13), e.g., a corner post of a platform of load carrying vehicle,. The handle is pivotably mounted in a joinmt (15) and extends in locking position between the movable and the fixed element and pivots during release away from one of these two elements. A piston element (19) is connected to the handle (14) via a joint (20), and is influenced by spring (21) and cooperates with a striking-plate (22) of the locking position of the handle. An imagined line (23) through the joint of the piston element and a contact point (24) of the piston element in the striking-plate passes the joint (15) of the latch handle during the maneuvering of the latch handle from a released position to a locked position.

## Description

### TECHNICAL FIELD

The present invention relates to a latch handle which forms a connecting means between an openable element, e.g., a pivotable or displaceable cover, and a fixed element, e.g., a platform corner post of a lorry, which handle is pivotable mounted in a joint and extends in locking position between the pivotable and the fixed elements and pivots during idle away from one of these two elements

### BACKGROUND OF THE INVENTION

Latch handles according to the above defined can be used for maneuvering a mechanism with the aid of which the ends of a platform boardscan be secured at a respective corner post. This mechanism usually comprises a number of parts and is thus expensive to manufacture. At covers or boards of vehicles transporting cargo it is desireable to be able to lock said covers or boards in a secure way in order to avoid unintentional opening thereof. This would otherwise lead to both personal and material damages. It is thus suitable that each cover or board end is secured by more than one blocking or locking means. It is known to use locking pins, wires, or the like, which are thread through a loop at the handle and in this way locks this visavi opening. This known solution is, however, circumstantial to use and there is a risk that pins are lost during handling.

### THE TECHNICAL PROBLEM

One object of the present invention is to obtain a locking device which cost efficient in manufacturing and is simple to handle.

### THE SOLUTION

In order to achieve this object the present invention is characterized in that a bolt means which is connected to the latch handle via a joint and which is influenced by a spring member, which bolt means cooperates with a striking-plate means in the locking position of the handle, whereby an imaginary line through the joint of the bolt means of the handle and a contact point of the bolt means in the striking-plate passes by the joint of the latch handle during maneuvering of the latch handle from an idle position to locking position.

### DESCRIPTION OF THE DRAWINGS

The invention will now be described with reference to an embodying example which is shown in the attached drawing, in which
- FIG. 1: shows a broken view of a part of a lorry platform with a corner post and a latch handle according to the invention;
- FIG. 2 a-c: shows the latch handle in an enlargement in three different positions of use;
- FIG. 3 a-c: shows a striking-plate means in a further enlargement in three different views;
- FIG. 4: shows a bolt means forming part of the invention; and
- FIG. 5: shows a part of the bolt means seen from above.

### DESCRIPTION OF AN EMBODYING EXAMPLE

The latch handle of the invention has been described in the following as being attached to a specific area of use for the locking of a platform board to a corner post, but several other fields of use are of course contemplated.

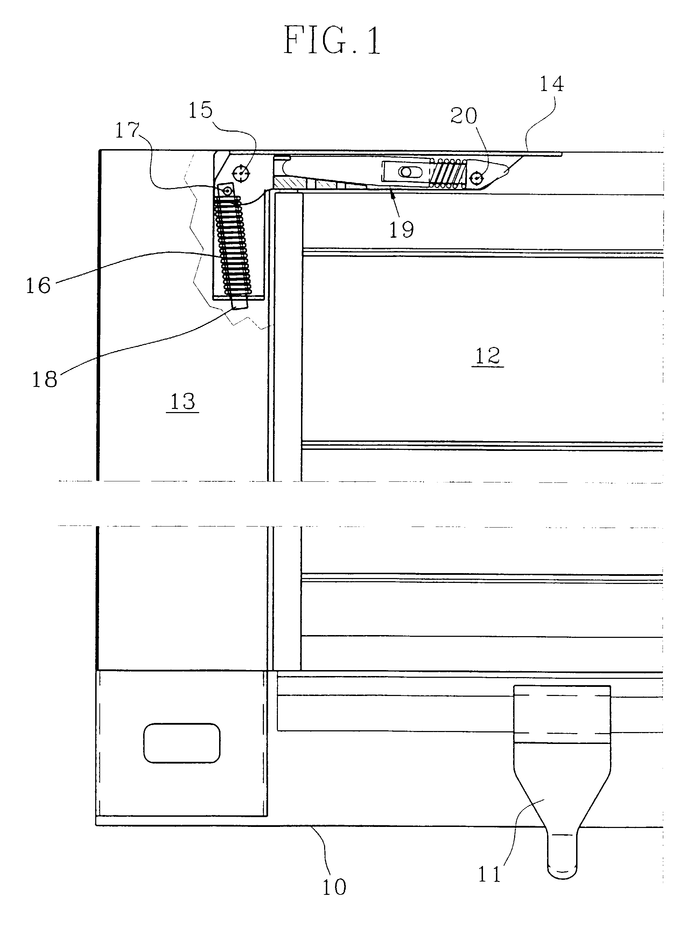

The lorry platform 10 shown in Fig. 1 in a broken view is provided with a holding means 11, which cooperates with the edge side of a platform board 12 to form a hinged joint. This joint fascilitates the lowering of the board between the position shown where the board abuts a vertical corner post 13, and a lowered position which fascilitates loading and unloading of goods unto the platform.

Locking, and maneuvering, respectively, of the board 12 is carried out by means of a handle 14 mounted in the respective corner post 13, which handle is pivotably mounted in a joint 15 at the upper end of the corner post. The joint comprises a shaft extending perpendicular to the longitudinal direction of the corner post and furthermore, perpendicular to the pivoting axis of the board. In locking position the handle extends in a right angle to the corner post into a upwardly opened channel in the platform board abutting the corner post. The platform board 12 is set free from the corner post 13 by pivoting the handle 14 upwardly, out of the channel/channels.

The handle 10 is influenced by a compression spring 16, which acts to keep the handle either in the locking position shown in Fig. 1, or in an open position, substantially in line with the corner post. The spring 16 is connected to the handle 14 via a pivoting shaft 17. The pivoting shaft 17 is present on one side of the joint shaft 15 when the handle is situated in the locking position shown in Fig. 1 and on the other side when the handle is situated in the open position. During pivoting of the handle from the one to the other position the compression spring will first become compressed and then again become decompressed so that the handle becomes self-locking. The compression spring 16 is thread onto a rod 18 which is pivotably mounted with its one end in the pivoting shaft 17, and which is displaceable with its opposite end in a hollow opening in the corner post 13.

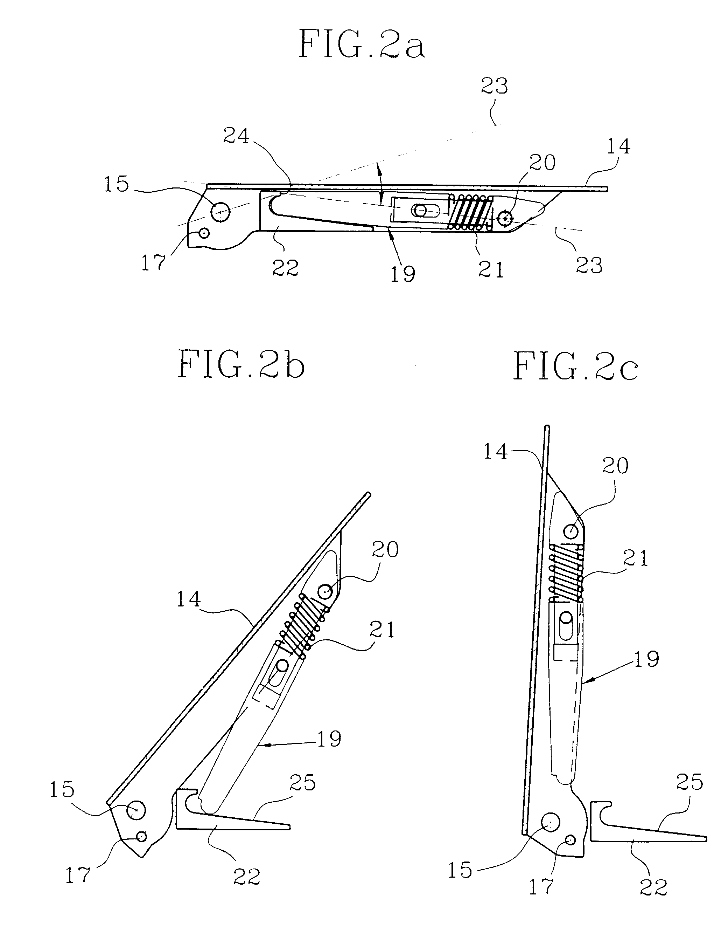

The handle 10 is U-shaped and is provided with an extra, blocking device being placed between the two side legs, which blocking device operates independently from the compression spring 16. The blocking device comprises a piston 19, which is connected via a joint 20 to the handle and is provided with a compression spring 21. The piston cooperates with a striking-plate 22 in the locking position of the handle, whereby the imagined line 23 of Fig. 2a, which extends through the joint 20 of the piston of the handle and the contact point 24 of the piston of the striking-plate 22, passes by the joint 15 of the latch hanlde during the maneuvering of the handle from an idle position to the locking position of board 12. The geometry provides for an efficient over-the-centre locking of the blocking device which locking occurs already at a pivoting angle of about 15 to 20° the locking position shown in Fig. 2a, which means that the handle is "drawn" down into a stable locking position.

It is evident from Fig. 2b that the free end of the piston 19 slides against a bevelled ramp surface 25 during the pivoting movement. As evident from Fig. 2c the blocking device 19 is protected between the two legs of the handle, when the handle is directed upwardly, i.e., in the angle position when loading and unloading of the platform takes place.

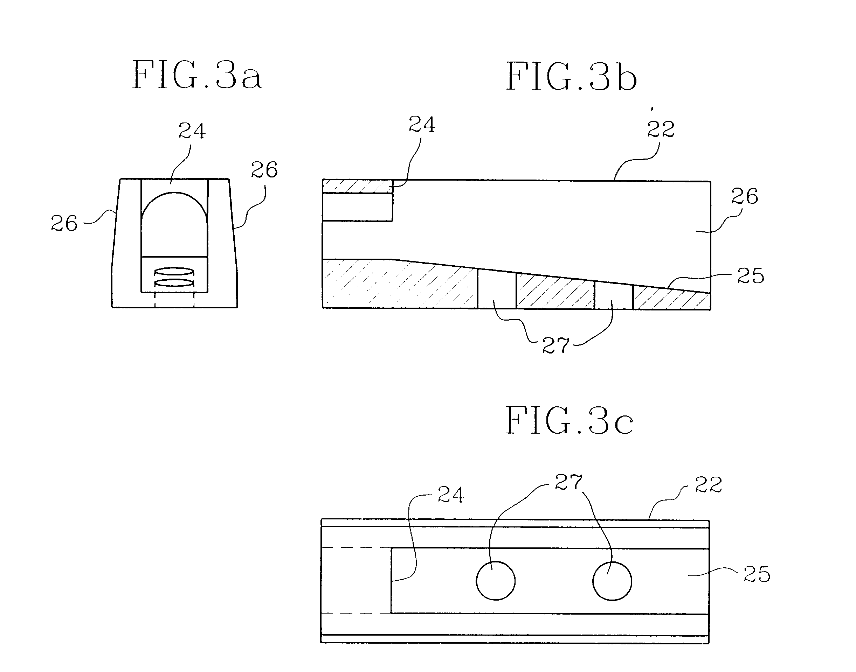

Fig. 3a-c shows the striking-plate 22 being substantially U-shaped with upwardly taperingside walls 26 in Fig. 3 on each side of the ramp surface 25. The contact point consists of a perpendicular bridge part which connects both side walls 26. As the striking-plate in other respects forms an open channel there is a minium of risk that dirt shall be able to influence the operation of the blocking device. The ramp side of the striking-plate is provided with two holes 27 for mounting screws, not shown.

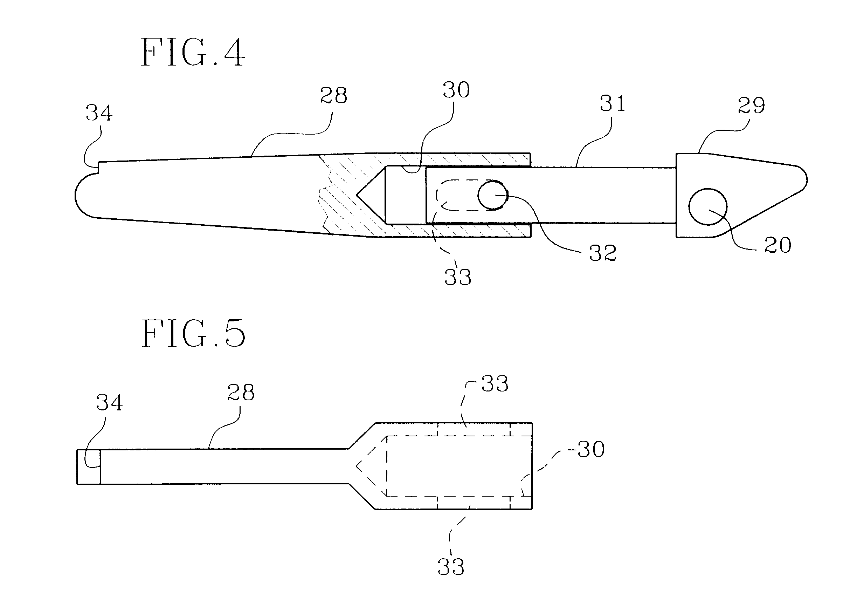

It is evident from Figs. 4 and 5 that the piston comprises two parts 28, 29 of which one part 29 forms the joint of the handle 10. The other part 28 is telescopically displaceably mounted at the first part via a cylindrical bore 30 which cooperates with a piston part 31 of the part 29. This piston part 31 forms the bearing for the compression spring 21. The two parts are connected by means of a perpendicular pin 32 which is fixedly connected to the piston part 31. The pin is displaceably mounted in oval slots 33 of the second part. A cross surface 34 at the free end of the part 28 is arranged to cooperate with the bridge part 24 of the srtiking-plate 22.

The handle 14 exerts a pressure action on the striking-plate in the locking position via the piston 19, which provides for a reduction of the play between the corner post and the platform board. Normally, a considerable play can occur at removable corner posts and this play would create a problem at the corner of the platform, which problem thus is avoided by the catching up at the piston 19 as decribed above.

The invention is not restricted to the embodying example given above, but several variants are contemplated within the frame of the accompanying claims. For example the piston 19 can be manufactured as one integral part, which is both pivotable and displaceably mounted at the latch ahndle via an oval slot, whereby the spring can act between a journal formed by the joint 20 and a perpendicular surface on the piston 19. The handle having the above described blocking means can be mounted in the displaceable board in stead of the fixed corner post.

## Claims

1. Locking means between two elements, a corner post (13) of a load carrying vehicle or the similar, and a platform board (12) being lowerable relative to said post, and which comprises a handle (14) being pivotably mounted in a joint (15), which handle extends in the locking position between the corner post and the platform board and is pivoted during release away from one of these two elements,
characterized in
that a spring biassed piston element (19) is pivotably connected to the handle (14) via a joint (20), which piston means cooperates with a striking-plate (22) of the locking position of the handle,
that the handle (14) is mounted at the upper end of the corner post (13) and that the striking-plate (22) at an upper corner of the platform board (22),
an imagined line (23) through the joint of the piston element and a contact point (24) of the piston element in the striking-plate passes the joint (15) of the latch handle during the maneuvering of the latch handle from a released position to a locked position.

2. Locking means accoording to claim 1, characterized in that the piston element (19) and the spring element (21) are placed between two legs of a U-shaped locking handle (14).

3. Locking means according to claims 1 or 2,
characterized in that

4. Locking means according any of the preceding claims,
characterized in
that the piston element (19) comprises two parts (28, 29) of which one part (29) forms the joint of the handle (14) and the second part (28) is telescopically displaceably mounted at the first part and cooperates with the striking-plate (22) in the locking position of the handle via an outer end (34).

5. Locking means according to claim 4,
characterized in
that the spring element (21) is a compression spring (21) which arranged between the two parts (28, 29).

6. Locking means according to claim 4 or 5,
characterized in that the two parts (28, 29) are connected by means of a perpendicular pin (32) which fixedly connected to the one part and displaceably mounted in an oval slot (33) in the second part.

7. Locking means according to claims 1 to 4,
characterized in
that the piston element (19) is pivotably and displaceably mounted to the locking handle (145) via an oval slot.
